# EUROPEAN PATENT APPLICATION

(11) **EP 4 614 523 A1**
(43) Date of publication of application: **10.09.2025**
(21) Application number: 25161652.0
(22) Date of filing: 04.03.2025
(51) Int. Cl.: G21K 1/04

(54) **X-RAY COLLIMATOR WITH IMPROVED TRANSMISSION DEVICE**

(30) Priority: 08.03.2024 IT 202400005272
(71) Applicant: Ralco S.r.l., 20853 Biassono, Monza e della Brianza (IT)
(72) Inventor: FERRERO, Matteo, Biassono, Monza e della Brianza (IT); ANGELICCHIO, Franco, Biassono, Monza e della Brianza (IT)
(74) Representative: Pulieri, Gianluca Antonio

(57) **Abstract**

An X-ray collimator (6) comprises a first rotatable shaft (40) having a first axis (A1) arranged longitudinally, a first pair of slats (32a,32b) sliding longitudinally and a first device for transmitting the motion from the first shaft (40) to the first pair of slats (32a,32b). The first transmission device comprises a first belt (42) rotationally jointed with the first shaft (40) and a first toothed pulley (46) with helical teeth, rotatable about a first secondary axis (A1') orthogonal to the first axis (A1) and translationally jointed with the slats (32a,32b) of the first pair. The first belt (42) is engaged with the first toothed pulley (46) in a semicrossed manner for the transmission of the motion between skew axes (A1,A1').

## Description

### Field of the invention

The present invention is in the field of X-ray equipment, in particular for medical use; in particular, the present invention relates to an X-ray collimator with slats for limiting an X-ray beam, provided with an innovative transmission device for moving said slats.

### Prior art

An X-ray collimator is usually applied downstream of a radiogenic source (X-ray tube) and is provided with a first pair of longitudinally translatable slats that relatively approach or move away from one another to narrow or widen the beam passage window longitudinally, and a second pair of transversely translatable slats that relatively approach or move away from one another to narrow or widen the beam passage window transversely.

To prevent the subject to be X-rayed, for example a patient, from being impacted by X-rays in parts that are not of interest to radiography, it is essential to be able to limit the beam of X-rays as needed; for example, for a knee X-ray, a window of 20 x 20 centimeters in size is generally sufficient, whilst for a chest X-ray a window of 50 x 50 centimeters in size is generally required.

The movement of the two pairs of slats may be performed manually, by rotating two respective knobs, or by means of an electric motor. In both cases, two respective transmission devices allow the transmission of the motion from the respective knob or motor to the respective pair of slats.

To move one of the two pairs of slats, it is necessary to provide two rotatable shafts, arranged orthogonally therebetween; the first is placed rotationally by the knob or by the motor, the second receives the rotary motion from the first by means of a belt and transmits said rotary motion to the slats. For the transmission of the motion from the first to the second, the solutions known today provide for the insertion of a bearing or roller for accompanying the belt onto the pulley of the driven shaft.

As is understood, the transmission device must be precise and reliable, in such a way that the rotation of a knob corresponds to the approaching and moving away of the slats in a precise and repeatable manner. The Applicant has found however that the transmission of the movement between the two orthogonal shafts by means of traditional systems has some drawbacks, especially in the transmission of the motion from the belt to the pulley of the driven shaft.

### Object of the invention

The object of the present invention is to implement an X-ray collimator with slats that is provided with a transmission device that meets the needs of the industry and overcomes the drawbacks mentioned above.

### Brief description of the figures

The features and advantages of the X-ray collimator according to the present invention will be apparent from the description below, given by way of non-limiting example in accordance with the figures in the attached drawings, wherein:

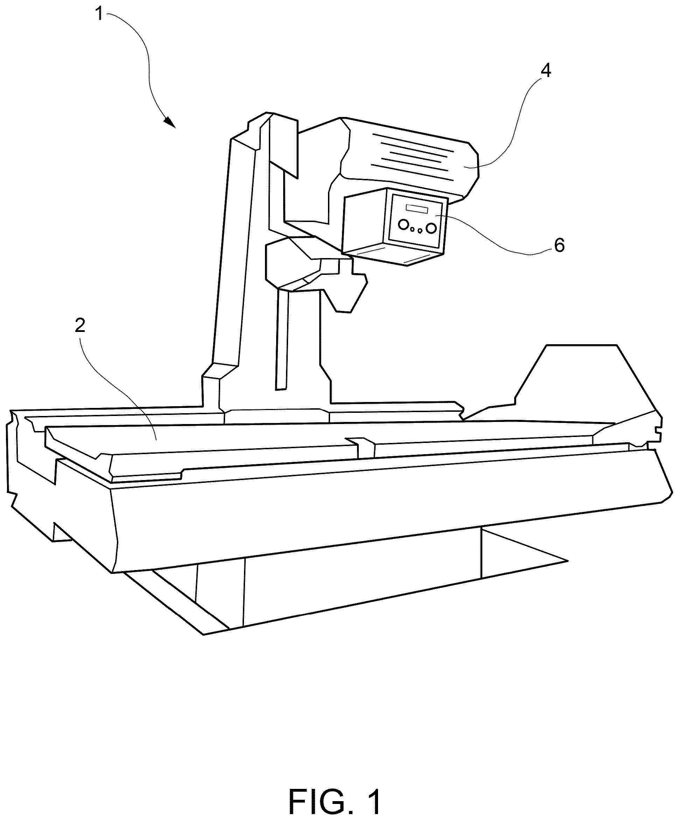

- Figure 1 shows an X-ray apparatus comprising a collimator according to an exemplary embodiment of the present invention;

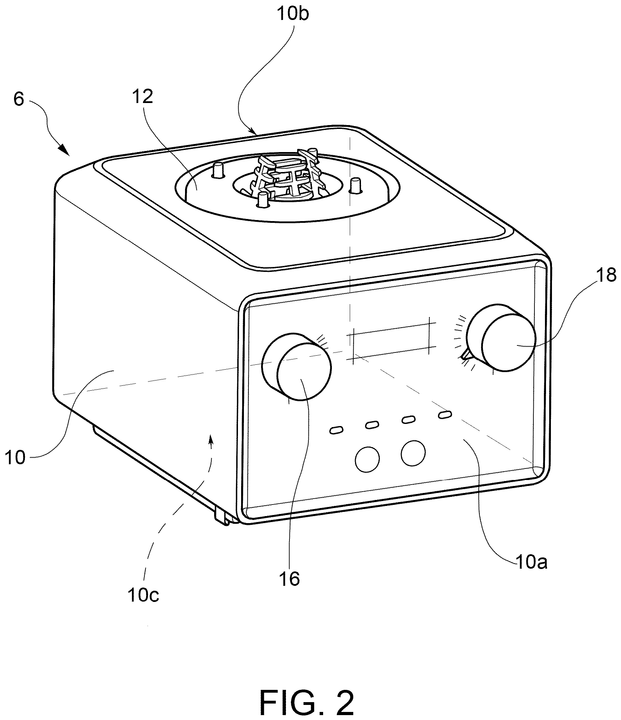

- Figure 2 shows an X-ray collimator according to an exemplary embodiment of the present invention;
- Figure 3 shows a mechanism for moving a collimator according to an exemplary embodiment of the present invention, according to a top view;
- Figure 4 shows the movement mechanism of Figure 3, according to a bottom view;
- Figure 5 is a side view of the movement mechanism in Figure 3; and
- Figure 6 shows a pulley with helical teeth, according to an exemplary embodiment of the present invention.

### Detailed description of embodiments of the invention

With reference to the figures in the accompanying drawings, the numeral 1 has been used to indicate an X-ray apparatus for taking X-rays, mainly in the medical, human or veterinary fields. The apparatus 1 comprises an X-ray machine 2 equipped with an X-ray tube 4 for emitting a beam of X-rays and an X-ray collimator 6 for limiting the width of the beam intended for the user.

The collimator 6 is applied downstream from the radiogenic source of the X-ray tube, generally by means of an adapter.

For example, the collimator 6 consists of a box-like body 10 provided with a front face 10a, an upper face 10b, generally provided with a head attachment 12 for the application of the collimator to the X-ray machine, and a lower face 10c provided with an exit window 14 for the collimated beam to exit.

According to one embodiment, the collimator 6 further comprises a first knob 16 and a second knob 18, which are rotatable in such a way as to modify the dimensions of the exit window 14, preferably arranged upon the front face 10a, in such a way that they are comfortably accessible by the operator.

According to a further embodiment (not shown), the collimator comprises buttons, generally arranged upon the front face 10a, which may be used by the operator to drive internal motors.

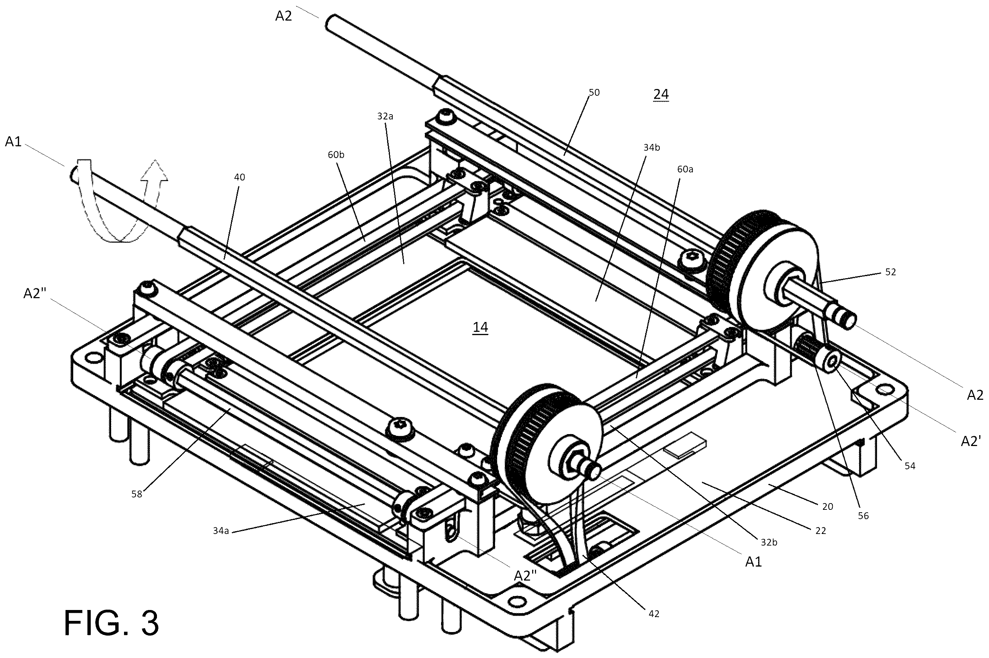

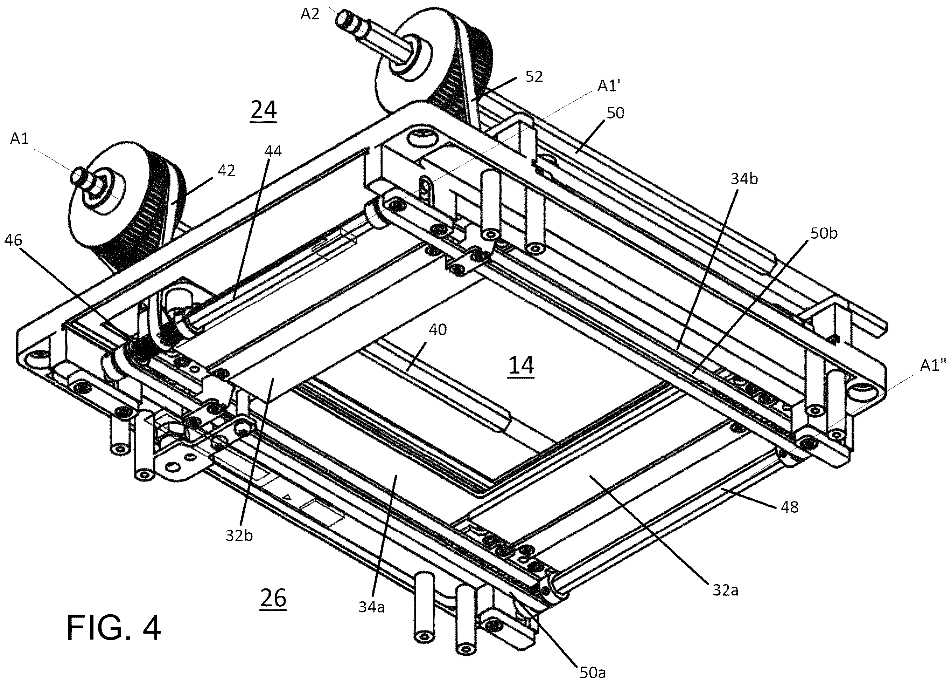

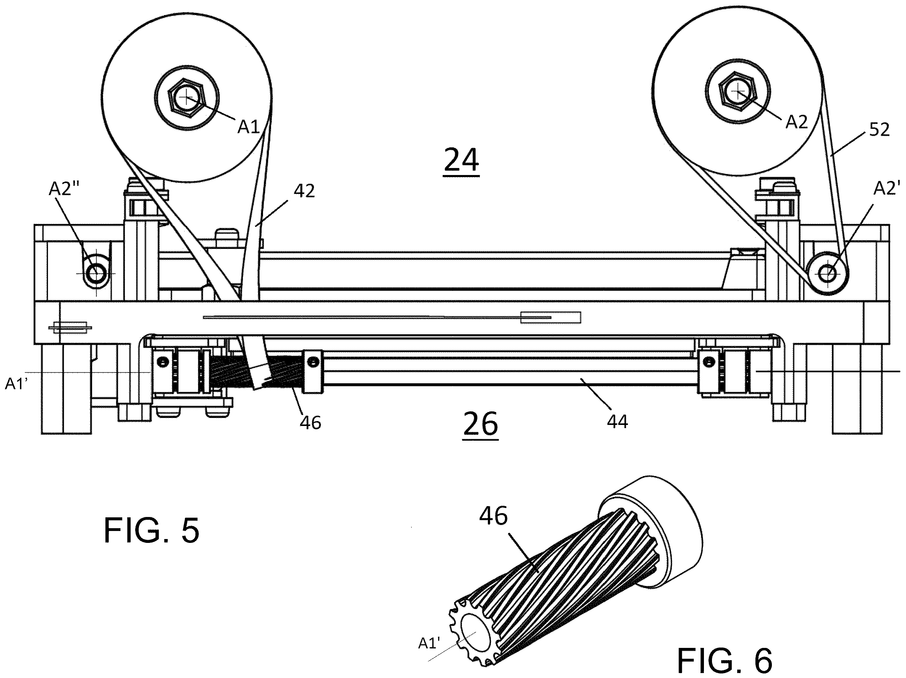

The collimator 6 further comprises, preferably, a support frame 20 accommodated in the box-like body 10, for supporting the components. The support frame 20 comprises a substantially flat base 22, for example quadrangular in shape, which divides the compartment inside the box-like body 10 into an upper region 24 (visible in Figures 3 and 5) and a lower region 26 (visible in Figures 4 and 5).

An opening is obtained through the base 22 that is longitudinally divisible by a first pair of slats 32a, 32b, preferably arranged in the lower region 26, and transversely is divisible by a second pair of slats 34a, 34b, preferably arranged in the upper region 24. The residual opening determines the exit window 14 of the collimated beam.

The slats 32a, 32b, 34a, 34b are made of a material with a high X-ray absorption capacity, such as lead.

The first knob 16 is rotatable about a first axis A1, arranged in the longitudinal direction, and is for example supported by a first shaft 40, preferably arranged in the upper region 24; the rotation in one direction or the other of the first knob 16 respectively determines the moving way from each other or approaching of the slats 32a, 32b of the first pair.

For this purpose, a first belt 42 is provided that is engaged with the first knob 16 by means of the first shaft 40, for example partially wound thereupon, and a first rotatable secondary shaft 44 is provided that extends along a first secondary axis A1', orthogonal to the first axis A1. The first secondary shaft 44 is preferably arranged in the lower region 26 and is operatively engaged with the first knob 16 by means of the first belt 42, which crosses the base 22.

In particular, a first toothed pulley 46 with helical teeth is provided that is rotationally jointed with the first secondary shaft 44; the first belt 42 is permanently engaged with the first toothed pulley 46, thus being able to easily transmit the rotary movement of the knob 16 to the first secondary shaft 44. Ultimately, the first belt 42 and the first toothed pulley 46 form a semi-crossed belt drive between skew axes, in particular orthogonal.

The first belt 42 is preferably toothed and the teeth are trapezoidal and adapted to be coupled to the helical teeth of the first toothed pulley 46 by shape coupling; during the rotation of the first toothed pulley 46, the portion of the first belt 42 engaged with the first toothed pulley 46 tends to translate, either forwards or backwards according to the direction of rotation. This ensures particularly fluid motion transmission.

A further secondary shaft 48 is also provided that is supported in a rotatable manner by the frame 20, arranged in the lower region 26 and rotatable about a further first axis A1", parallel to the first secondary axis A1' and arranged opposite to the first secondary shaft 44 with respect to the exit window 14.

A first pair of second belts 50a, 50b is also provided that connect the first secondary shaft 44 to the further secondary shaft 48, preferably at the respective transverse ends. Such second belts 50a, 50b have, respectively, a forward segment (from the first secondary shaft to the further secondary shaft) and a return segment (from the further secondary shaft to the first secondary shaft).

The first slat 32a is longitudinally slidable and is attached to the return segments of the two second belts 50a, 50b, whilst the second slat 32b is longitudinally slidable and is attached to the forward segments of the two second belts 50a, 50b, in such a way that rotation in one direction of the first knob 16 corresponds to the approaching or moving away from each other of the slats 32a, 32b of the first pair and rotation in the other direction of the first knob 16 corresponds to the moving away from each other or approaching of the slats 32a, 32b of the first pair.

Ultimately, the first belt 42, the first secondary shaft 44, the first toothed pulley 46, the further secondary shaft 48 and the first pair of second belts 50a, 50b form an example of a first device for transmitting the motion between the first knob 16 and the first pair of slats 32a, 32b.

In one embodiment variant the first transmission device comprises a first electric motor configured to rotationally drive, directly or indirectly, the first shaft 40 in one direction and also in the other direction.

Furthermore, the second knob 18 is rotatable about a second axis A2, arranged in the longitudinal direction, parallel to the first axis A1, and is for example supported by a second shaft 50, preferably arranged in the upper region 24, on the side opposite to the first shaft 40 with respect to the exit window 14. The rotation in one direction or the other of the second knob 18 respectively determines the moving way from each other or approaching of the slats 34a, 34b of the second pair.

For this purpose, a second belt 52 engaged with the second knob 18 is provided by means of the second shaft 50, for example partially wound thereupon, and a second rotatable secondary shaft 54 that extends along a second secondary axis A2', parallel to the second axis A2. Preferably, the second secondary shaft 54 is arranged in the upper region 24 and is operatively engaged to the second knob 18 by means of the second belt 52.

A second toothed pulley 56, preferably with straight teeth, that is rotationally jointed with the second secondary shaft 54, for example attached to one end thereof, is permanently engaged with the second belt 52, thus being able to transmit the rotary movement of the second knob 18 to the second secondary shaft 54. Ultimately, the second belt 52 and the second toothed pulley 56 form a belt drive between parallel axes.

A further second shaft 58 that is supported in a rotatable manner by the frame 20, arranged in the lower region 24 and rotatable about a further second axis A2", parallel to the second axis A2 and to the second secondary axis A2', and arranged opposite to the second secondary shaft 54 with respect to the exit window 14, is also engaged with a second pair of second belts 60a, 60b. Said belts connect the second secondary shaft 54 to the further secondary shaft 58, preferably at the respective longitudinal ends thereof, and have a forward segment (from the second secondary shaft to the further secondary shaft) and a return segment (from the further secondary shaft to the second secondary shaft), respectively.

The first slat 34a of the second pair is transversely slidable and is attached to the return segments of the two belts 60a, 60b of the second pair, whilst the second slat 34b is transversely slidable and is attached to the forward segments of the two belts 60a, 60b of the second pair, whereby the rotation in one direction of the second knob corresponds to the approaching or moving away from each other of the slats 34a, 34b of the second pair and the rotation in the other direction of the second knob corresponds to the moving away from each other or approaching of the slats 34a, 34b of the second pair.

Ultimately, the second belt 52, the second secondary shaft 54, the second toothed pulley 56, the further secondary shaft 58 and the second pair of second belts 60a, 60b form an example of a second device for transmitting the motion between the second knob 18 and the slats 34a, 34b of the second pair.

In an embodiment variant the second transmission device comprises a second electric motor configured to rotationally drive, directly or indirectly, the second shaft 50 in one direction and also in the other direction.

Innovatively, the collimator according to the present invention meets the needs of the sector and overcomes the aforementioned drawbacks insofar as the elasticity of the first belt, in combination with the helical teeth of the first toothed pulley, allows the motion between orthogonal shafts to be transmitted precisely and repetitively.

Advantageously, moreover, the teeth of the first belt and the consequent translation of the engaged portion, allows the motion between the first knob and the first secondary shaft to be transmitted in a very fluid manner.

It is understood that a person skilled in the art, in order to meet contingent needs, could make modifications to the device described above, wherein all thereof are contained within the scope of protection as defined by the following claims.

## Claims

1. An X-ray collimator (6) for delimiting an exit window (14) of an X-ray beam, comprising a first rotatable shaft (40) having a first axis (A1) arranged longitudinally, a first pair of slats (32a,32b) sliding longitudinally, approaching or moving away from each other to longitudinally delimit said exit window (14), and a first transmission device for transmitting the motion from the first shaft (40) to the first pair of slats (32a,32b), wherein said first transmission device comprises a first belt (42) rotationally jointed with the first shaft (40), a first toothed pulley (46) with helical teeth, rotatable about a first secondary axis (A1') orthogonal to the first axis (A1) and a first transmission mechanism connected to the first toothed pulley (46) and configured to make said slats (32a, 32b) of the first pair move closer together or further apart according to the rotation of said first toothed pulley (46), said first belt (42) being engaged with the first toothed pulley (46) in a semi-crossed manner for the transmission of the motion between skew axes (A1,A1').

2. An X-ray collimator according to claim 1, wherein the first belt (42) is toothed.

3. An X-ray collimator according to claim 2, wherein the first belt (42) has a trapezoidal toothing adapted to be coupled to the first toothed pulley (46) by shape coupling.

4. An X-ray collimator according to any one of the preceding claims, wherein a segment of the first belt (42), gripped by the first toothed pulley (46), is translatable on said first toothed pulley (46) during the rotation of said first toothed pulley (46).

5. An X-ray collimator according to any one of the preceding claims, wherein the first transmission mechanism further comprises:
- a first secondary shaft (44) rotatable about the first secondary axis (A1'), the first toothed pulley (46) being rotationally jointed with the first secondary shaft (44);
- a further secondary shaft (48) rotatable about a further secondary axis (A1") parallel to the first secondary axis (A1'), said further secondary shaft (48) being arranged opposite to the first secondary shaft (44) with respect to the exit window (14);
- a first pair of second belts (50a,50b) for transmitting the motion between the first secondary shaft (44) and the further secondary shaft (48), arranged on transversely opposite sides of the exit window (14);
wherein one slat (32a) of the first pair is fixed to a respective forward segment of the second belts (50a,50b) and another slat (32b) of the first pair is fixed to a respective return segment of the second belts (50a,50b).

6. An X-ray collimator according to any one of the preceding claims, comprising a second rotatable shaft (50) having a second axis (A2) arranged longitudinally parallel to the first axis (A1), a second pair of slats (34a,34b) sliding transversely, approaching or moving away from each other to transversely delimit said exit window (14), and a second transmission device for transmitting the motion from the second shaft (50) to the second pair of slats (34a,34b), wherein said second transmission device comprises a second belt (52) rotationally jointed with the second shaft (50), a second toothed pulley (58), rotatable about a second secondary axis (A2') parallel to the second axis (A2), and a second transmission mechanism connected to the second toothed pulley (58) and configured to make said slats (34a, 34b) of the second pair move closer together or further apart according to the rotation of said second toothed pulley (58), said second belt (56) being engaged with the second toothed pulley (58) for transmitting the motion between parallel axes (A2,A2').

7. An X-ray collimator according to claim 6, wherein the second toothed pulley (56) has straight teeth.

8. An X-ray collimator according to claim 6 or 7, wherein the second transmission mechanism comprises:
- a second secondary shaft (54) rotatable about the second secondary axis (A2'), the second toothed pulley (56) being rotationally jointed with the second secondary shaft (54);
- a further secondary shaft (58) rotatable about a further secondary axis (A2") parallel to the second secondary axis (A2'), said further secondary shaft (58) being arranged opposite to the second secondary shaft (54) with respect to the exit window (14);
- a second pair of second belts (60a,60b) for transmitting the motion between the second secondary shaft (54) and the further secondary shaft (58), arranged on longitudinally opposite sides of the exit window (14); wherein one slat (34a) of the second pair is fixed to a respective forward segment of the second belts (60a,60b) and another slat (34b) of the second pair is fixed to a respective return segment of the second belts (60a,60b).

9. An X-ray collimator according to any one of the preceding claims, comprising a support frame (20) having a substantially flat base (22) identifying an upper region (24) and a lower region (26).

10. An X-ray collimator according to claim 9, wherein the first shaft (40) is arranged in the upper region (24), the first secondary shaft (44) with the first toothed pulley (46) in the lower region (26), and the first belt (42) crosses the base (22).

11. An X-ray collimator according to claim 10, wherein the further secondary shaft (48) and the first pair of second belts (50a,50b) are arranged in the lower region (26).

12. An X-ray collimator according to any one of claims 9 to 11, wherein the second shaft (50) and the second secondary shaft (54) with the second toothed pulley (56) are arranged in the upper region (24).

13. An X-ray collimator according to claim 12, wherein the further secondary shaft (58) and the second pair of second belts (60a,60b) are arranged in the upper region (24).

14. An X-ray collimator according to any one of the preceding claims, being manually operable, for example by means of knobs (16,18).

15. An X-ray collimator according to any one of the preceding claims, being electrically operable, for example by means of electric motors.

16. An X-ray apparatus (1) comprising:
- an X-ray machine (2) provided with a ray tube (4) for emitting an X-ray beam;
- a collimator (6) according to any one of the preceding claims, applied to the ray tube (4), downstream of the X-ray source.
